# EUROPÄISCHE PATENTANMELDUNG

(11) **EP 4 335 335 A1**
(43) Veröffentlichungstag der Anmeldung: **13.03.2024**
(21) Anmeldenummer: 22195154.4
(22) Anmeldetag: 12.09.2022
(51) Int. Cl.: A47J 37/07

(54) **FEUERSCHALE UMFASSEND EINEN SOCKEL UND EINE FEUERAUFNAHME, VERFAHREN ZUM VERSTELLEN DER HÖHE EINER FEUERSCHALE SOWIE VERWENDUNG EINES GEWINDES ZUR HÖHENVERSTELLUNG EINER FEUERAUFNAHME**

(71) Anmelder: smaract GmbH, 9524 Zuzwil (CH)
(72) Erfinder: Versnik, Thomas, 9245 Oberbüren (CH); Rüegg, Christian, 9245 Sonnental (CH)
(74) Vertreter: Hepp Wenger Ryffel AG

(57) **Zusammenfassung**

Die Erfindung betrifft eine Feuerschale (1) mit einem Sockel (2) und einer Feueraufnahme (3). Die Feueraufnahme (3) ist auf dem Sockel (2) angeordnet. Die Feueraufnahme (3) ist dazu ausgebildet, Brennmaterial für ein Feuer aufzunehmen. Die Feueraufnahme (3) und der Sockel (2) sind relativ zueinander um eine Drehachse drehbar ausgebildet. Die Feueraufnahme (3) kann durch eine Drehung um die Drehachse in ihrer Höhe verstellt werden. Die Feueraufnahme (3) weist einen Schwerpunkt auf, welcher auf der Drehachse liegen kann. Die Feueraufnahme (3) kann rotationssymmetrisch ausgebildet sein.

Die Erfindung betrifft ausserdem ein Verfahren zum Verstellen der Höhe einer Feuerschale (1) sowie eine Verwendung eines Gewindes zwischen einer Feueraufnahme (3) und einem Sockel (2) zur Höhenverstellung der Feueraufnahme (3).

## Beschreibung

Die vorliegende Erfindung betrifft eine Feuerschale umfassend einen Sockel und eine Feueraufnahme, ein Verfahren zum Verstellen der Höhe einer Feuerschale sowie die Verwendung eines Gewindes zur Höhenverstellung einer Feueraufnahme.

Feuerschalen sind aus dem Stand der Technik bekannt. Bekannt sind Feuerschalen, welche sich nicht in ihrer Höhe verstellen lassen. Ausserdem sind Feuerschalen bekannt, bei dem sich eine Grilloberfläche, beispielsweise ein Rost, relativ zu der Feuerschale bzw. zu einem Feuer verschieben lässt.

Die aus dem Stand der Technik bekannten Feuerschalen haben den Nachteil, dass das Feuer sehr tief angeordnet ist und somit die mit der Feuerschale verbundene Grillfläche ebenfalls. Benutzer, welche sich an dem Feuer wärmen möchten oder welche auf einer angenehmen Höhe auf der Feuerschale grillieren möchten, müssen sich hinunterbeugen oder in die Knie gehen, was sehr unangenehm sein kann. Dies schränkt den Komfort bei dem Gebrauch der Feuerschale, beispielsweise beim Grillieren, ein.

Es ist die Aufgabe der Erfindung, die Nachteile des Stands der Technik zu überwinden und insbesondere eine Feuerschale zu schaffen, welche bequem zum Grillieren zu nutzen ist.

Die Aufgabe wird durch eine Feuerschale, ein Verfahren zum Verstellen der Höhe einer Feuerschale sowie die Verwendung eines Gewindes zur Höhenverstellung einer Feueraufnahme gemäss den unabhängigen Patentansprüchen gelöst.

Insbesondere wird die Aufgabe durch eine Feuerschale umfassend einen Sockel und eine Feueraufnahme gelöst. Die Feueraufnahme ist auf dem Sockel angeordnet. Die Feueraufnahme ist dazu ausgebildet, Brennmaterial für ein Feuer aufzunehmen. Die Feueraufnahme und der Sockel sind relativ zueinander um eine Drehachse drehbar ausgebildet. Die Feueraufnahme ist durch eine Drehung um Drehachse in ihrer Höhe verstellbar. Die Feueraufnahme weist einen Schwerpunkt auf, welcher auf der Drehachse liegen kann. Die Feueraufnahme kann rotationssymmetrisch ausgebildet sein.

Eine solche Höhenverstellung der Feuerschale durch eine Drehung um eine Drehachse ist einfach und unkompliziert.

Die Feueraufnahme und der Sockel können beispielsweise aus Stahl gefertigt sein. Es ist auch möglich, dass die Feueraufnahme und der Sockel aus unterschiedlichen Materialien oder aus anderen Materialien gefertigt sind. Entscheidend ist, dass das Material zur Aufnahme von Feuer geeignet ist und das das Material hitzebeständig ist. Wenn der Schwerpunkt der Feueraufnahme auf der Drehachse liegt und/oder die Feueraufnahme rotationssymmetrisch ausgebildet ist, kann die Feueraufnahme besonders angenehm und einfach gedreht und in ihrer Höhe verstellt werden. Durch die Rotationssymmetrie der Feueraufnahme bildet die Feueraufnahme bei der Drehung keine Unwucht aus. Dadurch kann die Feueraufnahme gedreht werden, ohne dabei wesentlich in Schwingungen zu geraten oder umzufallen.

Die Feueraufnahme kann beispielsweise eine Grundfläche in Form eines Kreises, eines Quadrates, eines Rechtecks, eines Dreiecks oder eines rotationssymmetrischen Polygons aufweisen. Es ist möglich, dass die Höhe durch eine Drehung der Feueraufnahme im Uhrzeigersinn vergrössert werden kann. Es ist auch möglich, dass die Höhe der Feueraufnahme durch eine Drehung entgegen dem Uhrzeigersinn vergrössert werden kann. Brennmaterial kann beispielsweise Holz oder Holzkohle sein. Es ist auch möglich, dass ein anderes Brennmaterial verwendet wird.

Die Feueraufnahme kann ein erstes Gewinde aufweisen. Der Sockel kann ein zweites Gewinde aufweisen, welches mit dem ersten Gewinde korrespondiert. Das erste Gewinde kann ein Aussengewinde sein. Das zweite Gewinde kann ein Innengewinde sein.

Als Aussengewinde kann das erste Gewinde beispielsweise auf einer Spindel ausgebildet sein. Das zweite Gewinde kann dann als Innengewinde einer Spindelmutter ausgebildet sein. Dann ist die Spindel mit der Feueraufnahme und die Spindelmutter mit dem Sockel verbunden. Die Spindel und die Spindelmutter können beispielsweise aus Stahl gefertigt sein. Auch andere Materialien oder unterschiedliche Materialien sind denkbar. Entscheidend ist, dass sowohl die Spindel als auch die Spindelmutter robust und hitzeresistent ausgebildet sind. Die Spindel kann mit der Feueraufnahme beispielsweise durch Schweissen oder mittels einer Schraubenverbindung verbunden sein. Die Spindelmutter kann mit dem Sockel beispielsweise durch Schweissen oder mittels einer Schraubenverbindung verbunden sein.

Beim ersten Gewinde und bei dem zweiten Gewinde kann es sich um Trapezgewinde handeln. Bei dem ersten Gewinde und bei dem zweiten Gewinde kann es sich um eingängige Trapezgewinde handeln.

Durch den Einsatz eines Trapezgewindes ist die Feuerschale gut verstellbar und das Gewinde ist robust, schmutzresistent und langlebig.

Ein Trapezgewinde ist selbsthemmend. Dies hat zur Folge, dass die Feuerschale, wenn sie von einem Benutzer durch eine Drehung in eine bestimmte Höhe gebracht ist, nicht ohne eine äussere Krafteinwirkung durch einen Benutzer die eingestellte Höhe verlässt. Ohne eine Krafteinwirkung verbleibt die Feueraufnahme somit in der eingestellten Höhe. Ausserdem ist ein Trapezgewinde sehr resistent gegenüber Schmutz. Eine Feuerschale wird regelmässig unter freiem Himmel verwendet und ist der Witterung ausgesetzt. Ausserdem fällt in einer Feuerschale naturgemäss Schmutz wie beispielsweise Asche an. Deshalb ist bei einer Feuerschale die Anordnung eines schmutzresistenten Trapezgewindes vorteilhaft.

Das erste Gewinde und das zweite Gewinde können eine Gewindesteigung von 3 mm bis 15 mm, insbesondere zwischen 5 mm und 10 mm, aufweisen.

Durch eine solche Gewindesteigung ist gewährleistet, dass ein Benutzer mit einer angemessenen Anzahl an Drehungen der Feueraufnahme die Feueraufnahme in die gewünschte Höhe verbringen kann. Ausserdem ist durch eine solche Gewindesteigung gewährleistet, dass sich die Feueraufnahme nicht ohne eine Krafteinwirkung eines Benutzers nach unten bewegt, wenn sie vorher durch einen Benutzer in eine bestimmte Höhe gebracht wurde. Die angegebene Gewindesteigung sorgt somit dafür, dass die Feueraufnahme effizient verstellt werden kann und doch ohne eine äussere Krafteinwirkung in der eingestellten Höhe verbleibt.

Die Feuerschale kann eine Grillfläche für die Auflage von Grillgut aufweisen. Die Grillfläche kann in einem fixen Abstand zur Feueraufnahme angeordnet sein. Die Grillfläche kann somit durch eine Drehung der Feueraufnahme höhenverstellbar relativ zum Sockel ausgebildet sein. Die Grillfläche kann in einem oberen Bereich der Feueraufnahme angeordnet sein. Die Grillfläche kann zumindest teilweise ein Rost sein.

Durch die Anordnung einer Grillfläche ist es möglich, auf der Feuerschale angenehm und komfortabel zu grillieren.

Die Grillfläche ist aus einem hitzebeständigen, feuerfesten Material wie beispielsweise Stahl ausgebildet. Auch andere Materialien sind denkbar. Entscheiden ist, dass die Grillfläche hitzebeständig ist und Grillgut aufnehmen kann. Der fixe Abstand der Grillfläche zur Feueraufnahme bedeutet, dass sich bei einer Drehung der Feueraufnahme relativ zum Sockel der Abstand zwischen der Grillfläche und dem Sockel ändert, aber nicht der Abstand zwischen der Grillfläche und der Feueraufnahme und somit auch nicht der Abstand zwischen der Grillfläche und dem Feuer.

Die Grillfläche kann auf ihrer gesamten Fläche ein Rost sein. Es ist auch möglich, dass die Grillfläche nur teilweise ein Rost ist, und dass ein weiterer Teil der Grillfläche als Stahlplatte ausgebildet ist. Die Stahlplatte kann Aussparungen oder Löcher aufweisen. Die Grillfläche kann fest mit der Feueraufnahme verbunden sein. Es ist möglich, dass die Grillfläche an die Feueraufnahme angeschweisst ist. Es ist auch möglich, dass die Grillfläche nicht fest mit der Feueraufnahme verbunden ist, sondern beispielsweise auf Kontaktflächen aufliegt. Dann ist die Grillfläche formschlüssig mit der Feueraufnahme verbunden und wird durch die Schwerkraft auf der Feueraufnahme gehalten. Es ist auch möglich, dass ein Teil der Grillfläche fest mit der Feueraufnahme verbunden ist und ein anderer Teil der Grillfläche auf Kontaktflächen aufliegt und so durch einen Benutzer von der Feuerschale gelöst und angehoben werden kann. Es ist möglich, dass der aufliegende Teil der Grillfläche beweglich, beispielsweise mit Scharnieren, mit dem Teil der Grillfläche verbunden ist, der fest mit der Feueraufnahme verbunden ist. Die Grillfläche kann in Grillflächensegmente aufgeteilt sein, die gleich oder unterschiedlich ausgebildet sein können. Es können somit Grillfläche, Rostflächen oder ein teilweise offener Bereich kombiniert sein. Die Grillflächensegmente könne Hälften, Drittel oder Viertel sein. Die Grillflächensegmente können fest verbunden oder austauschbar ausgebildet sein. Die Grillfläche ist bevorzugt eine Fläche, die am Aussenrand der Feueraufnahme angeordnet ist und im mittleren Bereich der Feuerschale eine Öffnung aufweist, damit das Feuer in der Mitte sichtbar und gut belüftet ist. Somit kann die Grillfläche ein Kreisring, ein Ellipsoidring oder ein Polygonring sein.

Die Feueraufnahme der Feuerschale kann zumindest teilweise die Form einer Halbkugel oder eines Ellipsoiden aufweisen. Die Feueraufnahme der Feuerschale kann ausserdem zumindest teilweise die Form einer Kugelkalotte aufweisen.

Durch eine solche Form der Feueraufnahme ist die Feueraufnahme funktionell sehr hochwertig und es ergibt sich ausserdem ein ästhetisch sehr ansprechendes Bild und eine gute Belüftung des Feuers.

Mit der Form der Feueraufnahme ist die Aussenform der Feueraufnahme gemeint. Innen ist die Feueraufnahme hohl und kann beispielsweise eine Grillfläche, Abstützvorrichtungen bzw. Brennmaterial für ein Feuer aufnehmen. Selbstverständlich ist es möglich, dass die Feueraufnahme Aussparungen oder Löcher aufweist, durch die ein Feuer Luft ansaugen kann. Die Feueraufnahme kann beispielsweise eine Wandstärke von 5 mm aufweisen.

Die Feueraufnahme kann als hohle Halbkugel ausgebildet sein. Eine Kugelkalotte ist der gekrümmte Teil der Oberfläche eines Kugelsegments. Ein Kugelsegment ist ein Teil eines Kugelkörpers, der durch den Schnitt mit einer Ebene abgetrennt wird. Es ist auch möglich, dass die Feueraufnahme die Form einer Kugelkalotte aufweist, die mittels eines weiteren Schnitts begrenz wird, der parallel zum ersten Schnitt verläuft. Dann ist die Feueraufnahme als Kugel ausgebildet, wobei die Kugel durch zwei parallele Ebenen abgetrennt wird. Ein solcher Körper kann beispielsweise entstehen, indem eine Kugel hälftig geteilt wird und die Halbkugel mit einem weiteren Schnitt geteilt wird, der parallel zum ersten Schnitt verläuft. Dann entsteht eine Feueraufnahme in Form einer abgestumpften Halbkugel, welche auf die Fläche des Stumpfes auf eine ebene Oberfläche abgestellt werden kann.

Das erste Gewinde oder das zweite Gewinde der Feuerschale können als Aussengewinde einer Spindel ausgebildet sein. Die Spindel kann eine Spindellänge zwischen 10 und 50 cm aufweisen. Die Spindel kann insbesondere eine Spindellänge zwischen 20 und 35 cm aufweisen.

Eine Spindel ist ein stabiles Bauteil mit einem Gewinde, so dass durch das Verbauen einer Spindel die Feuerschale funktionell und robust konstruiert werden kann.

Die Spindel kann einen Durchmesser von 2 cm aufweisen. Die Spindel kann auch einen Durchmesser von beispielsweise 5 cm oder 10 cm aufweisen. Die Spindel kann einen Aussendurchmesser von im Wesentlichen 4 cm aufweisen. Die Spindelmutter kann einen dazu korrespondierenden Innendurchmesser von 4 cm aufweisen. Die Spindelmutter kann einen Aussendurchmesser von 8 cm aufweisen. Die Spindel kann hohl sein oder nicht hohl sein. Die Spindel ist bevorzugt aus einem robusten, hitzebeständigen Material ausgebildet, wie beispielsweise Stahl. Das Gewinde der Spindeln kann rechtsgängig oder linksgängig sein. Die Spindel kann mit der Feueraufnahme oder mit dem Sockel durch Schweissen stoffschlüssig verbunden sein. Es ist auch möglich, dass die Spindel mit der Feueraufnahme oder mit dem Sockel mittels einer Schraubenverbindung verbunden ist. Die Spindel kann mit der Feueraufnahme auch durch eine Schweissverbindung und durch eine Schraubenverbindung verbunden sein.

Der Sockel der Feuerschale kann eine Säule und eine Bodenplatte aufweisen. Die Säule und die Bodenplatte können eine im Wesentlichen identische Längsachse aufweisen, welche in einem bestimmungsgemässen Einsatz der Feuerschale lotrecht ausgebildet ist. Radial von der Längsachse kann die Bodenplatte eine Ausdehnung aufweisen, die mindestens zweimal so gross ist wie die radiale Ausdehnung der Säule. Die Bodenplatte kann ausserdem radial zur Längsachse eine Ausdehnung aufweisen, die mindestens 2,5-mal so gross ist wie die radiale Ausdehnung der Säule. Die radiale Ausbildung der Bodenplatte ausgehend von der Längsachse kann 0,6-bis 0,8-mal so gross sein wie die radiale Ausdehnung der Feueraufnahme.

Durch die angegebenen Grössenverhältnisse steht die Feuerschale sicher auf einer ebenen Oberfläche und es ergibt sich ein ästhetisch ansprechendes Bild der Feuerschale.

Die Säule sowie die Bodenplatte können aus Stahl gefertigt sein. Auch andere Materialien oder unterschiedliche Materialien sind denkbar. Entscheidend ist, dass sowohl die Säule als auch die Bodenplatte aus einem hitzebeständigen, robusten Material gefertigt sind. Die Säule kann eine Wandstärke von beispielsweise 5 mm aufweisen. Die Bodenplatte kann eine Stärke von beispielsweise 8 mm aufweisen.

Das zweite Gewinde kann als Innengewinde einer Spindelmutter ausgebildet sein. Die Spindelmutter kann in der Säule angeordnet sein. Die Spindelmutter kann beispielsweise stoffschlüssig durch Schweissen oder mittels einer Schraubenverbindung mit der Säule verbunden sein. Es ist möglich, dass die Spindelmutter im Innenbereich der Säule angeordnet ist und mit Stahlstäben mit der Innenseite der Aussenwand der Säule verbunden ist. Es ist möglich, dass die Spindelmutter an eine obere Wand der Säule angeflanscht ist.

Die Feueraufnahme der Feuerschale kann eine Feuerplatte aufweisen, auf welcher der Brennstoff eines Feuers anordenbar ist. Die Feuerplatte kann insbesondere mindestens einen Lufteinlass aufweisen.

Auf einer solchen Feuerplatte ist der Brennstoff eines Feuers vorteilhaft anordenbar.

Die Feuerplatte kann im Innenbereich der Feueraufnahme angeordnet sein. Die Feuerplatte kann bei dem ordnungsgemässen Betrieb der Feuerschale im Wesentlichen horizontal ausgebildet sein. Dann ist die Feuerplatte parallel zu der Bodenplatte des Sockels ausgebildet. Die Feuerplatte kann auch parallel zu einer oberen Wand der Säule ausgebildet sein. Die Feuerplatte kann in der Feueraufnahme oberhalb der Spindel ausgebildet sein. Es ist möglich, dass die Spindel eine Längsachse aufweist, die die Feuerplatte im Wesentlichen orthogonal schneidet.

Die Feuerplatte ist aus einem robusten, hitzebeständigen Material wie beispielsweise Stahl gefertigt. Auch andere Materialien sind denkbar. Entscheidend ist, dass die Feuerplatte stabil genug ist, um den Brennstoff eines Feuers aufzunehmen, und dass die Feuerplatte hitzebeständig ist. Durch die Ausbildung eines Lufteinlasses in der Feuerplatte ist es möglich, dass ein Feuer, welches sich auf der Feuerplatte befindet, mit Luft versorgt werden kann, welche durch das Feuer von einem Bereich unter der Feuerplatte durch die Lufteinlass zu dem Feuer gesaugt wird. In der Feuerplatte können weitere Lufteinlässe vorgesehen sein. Es ist möglich, dass in der Feuerplatte eine Vielzahl von Lufteinlässen vorgesehen sind. Die Lufteinlässe können eine unterschiedliche Grösse und Form aufweisen. Die Lufteinlässe können punktsymmetrisch oder liniensymmetrisch angeordnet sein, so dass sich ein optisch ansprechendes Bild ergibt.

Es ist möglich, dass die Feuerschale weitere Lufteinlässe aufweist. Beispielsweise können in der Säule Lufteinlässe angeordnet sein. Dann kann die Luft von einem Feuer auf der Feuerplatte durch die Lufteinlässe in der Säule, durch die Säule und anschliessend durch die Lufteinlässe der Feuerplatte zu dem Feuer gesaugt werden. So entsteht ein Kamineffekt und das Feuer kann effizient und russarm betrieben werden.

Das erste Gewinde und/oder das zweite Gewinde der Feuerschale können geschmiert sein. Die Säule kann eine Öffnung aufweisen, durch die eine Schmiervorrichtung einführbar ist.

Durch eine Schmierung des ersten Gewindes und/oder des zweiten Gewindes ist die Feuerschale vorteilhaft zu betreiben, zu warten und dadurch sehr langlebig. Ausserdem ist das Gewinde durch eine Schmierung vor Korrosion geschützt.

Die Öffnung in der Säule kann kreisrund ausgebildet sein. Die Öffnung in der Säule kann auch eine andere Form aufweisen. Es ist möglich, durch die Öffnung in der Säule eine Schmiervorrichtung wie beispielsweise eine Fettpresse einzuführen, um die Gewinde zu schmieren. Es ist möglich, dass im Bereich des ersten Gewindes oder im Bereich des zweiten Gewindes ein Schmiernippel angebracht ist. Dann kann eine Fettpresse durch die Öffnung der Säule zu dem Schmiernippel geführt werden und durch den Schmiernippel kann das erste Gewinde und/oder das zweite Gewinde geschmiert werden.

Die Aufgabe der Erfindung wird ausserdem gelöst durch ein Verfahren zum Verstellen der Höhe einer Feuerschale wie vorhergehend beschrieben. In dem Verfahren wird die Feueraufnahme durch eine Drehung der Feueraufnahme in der Höhe verstellt.

Ein solches Verfahren ist einfach und unkompliziert ausführbar.

Bei dem Verfahren kann die Feueraufnahme ein erstes Gewinde umfassen und der Sockel kann ein zweites Gewinde umfassen. Das erste Gewinde und das zweite Gewinde können relativ zueinander drehen und so die Höhe der Feueraufnahme verändern.

Die Aufgabe der Erfindung wird ausserdem durch die Verwendung eines Gewindes einer Feueraufnahme und einem Sockel zur Höhenverstellung der Feueraufnahme gelöst. Insbesondere wird das Gewinde verwendet, um eine an einer Feueraufnahme fixierte Grillfläche relativ zum Sockel in ihrer Höhe zu verstellen.

Die Erfindung wird anhand der folgenden Figuren näher erläutert. Es zeigt:
- Figur 1:: Eine Seitenansicht einer Feuerschale,
- Figur 2:: eine Draufsicht auf eine Feuerschale,
- Figur 3:: eine Seitenansicht eines Schnitts einer Feuerschale,
- Figur 4:: eine Ansicht einer Feuerschale,
- Figur 5:: eine Seitenansicht einer höhenverstellten Feuerschale,
- Figur 6:: eine Seitenansicht eines Schnitts einer höhenverstellten Feuerschale,
- Figur 7:: eine Ansicht einer höhenverstellten Feuerschale.

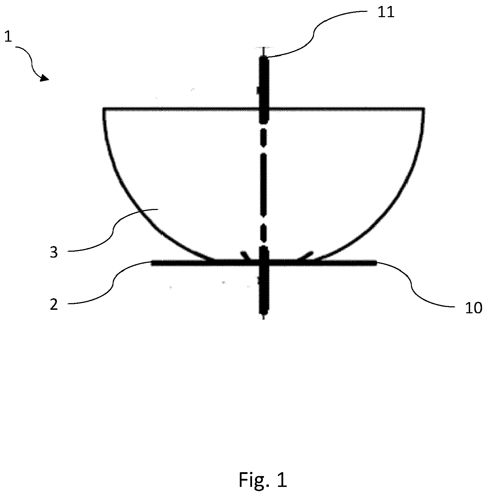

Figur 1 zeigt eine Seitenansicht einer Feuerschale 1. Die Feueraufnahme 3 ist auf dem Sockel 2 angeordnet. Die Feueraufnahme 3 ist zumindest teilweise geformt wie eine Halbkugel, die am unteren Ende abgeflacht ist. Der Sockel 2 umfasst eine Bodenplatte 10. Mit dem abgeflachten Ende ist die Halbkugel der Feueraufnahme 3 auf der Bodenplatte 10 des Sockels 2 angeordnet. Die Feueraufnahme 3, der Sockel 2 sowie die Bodenplatte 10 weisen eine identische Drehachse 11 auf. Die Feueraufnahme 3 ist um die Drehachse 11 drehbar angeordnet. Die Bodenplatte 10 des Sockels 2 sowie die Feueraufnahme 3 sind rotationssymmetrisch in Bezug auf die Drehachse 11 ausgebildet.

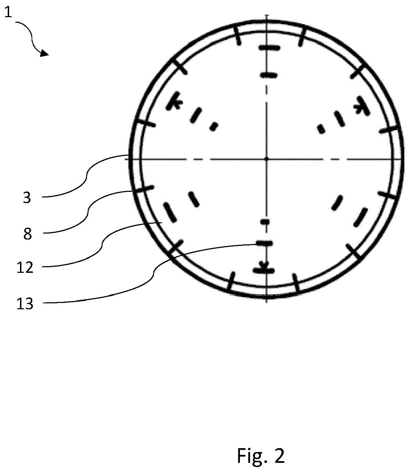

Figur 2 zeigt eine Draufsicht auf eine Feuerschale 1. Die Feueraufnahme 3 weist eine kreisförmige Grundfläche auf. Die Feueraufnahme 3 weist Stützvorrichtungen 8 auf, auf die eine Grillfläche (nicht dargestellt) anordenbar ist. Die Feueraufnahme 3 weist eine Feuerplatte 12 auf. In der Feuerplatte 12 sind mehrere Lufteinlässe 13 angeordnet. Auf der Feuerplatte 12 ist Brennmaterial (nicht dargestellt) für ein Feuer anordenbar. Durch die Lufteinlässe 13 kann Luft von dem Bereich unterhalb der Feuerplatte 12 durch die Lufteinlässe 13 zu dem brennenden Brennmaterial (nicht dargestellt) des Feuers auf der Feuerplatte 12 gelangen. Die Feuerplatte 12 ist im Innenbereich der Feueraufnahme 3 angeordnet.

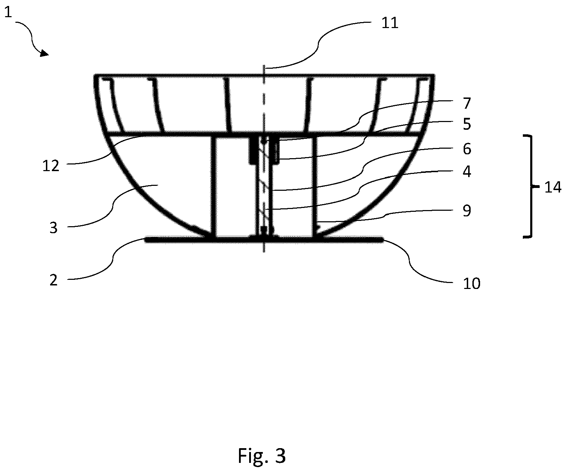

Figur 3 zeigt eine Seitenansicht eines Schnitts einer Feuerschale 1. Die Feuerschale 1 weist einen Sockel 2 sowie eine Feueraufnahme 3 auf. Die Feueraufnahme 3 ist auf dem Sockel 2 angeordnet. Der Sockel 2 weist eine Bodenplatte 10 sowie eine Säule 9 auf. Die Feueraufnahme 3 sowie der Sockel 2 mit der Säule 9 und der Bodenplatte 10 sind im Wesentlichen rotationssymmetrisch zu einer Drehachse 11 ausgebildet. Die Feueraufnahme 3 ist auf dem Sockel 2 drehbar um die Drehachse 11 gelagert. Die Feueraufnahme 3 weist eine Feuerplatte 12 auf. Die Feuerplatte 12 ist im Wesentlichen horizontal angeordnet. Auch die Bodenplatte 10 ist im Wesentlichen horizontal angeordnet. Somit sind die Feuerplatte 12 und die Bodenplatte 10 im Wesentlichen parallel angeordnet. Die Feueraufnahme 3 weist eine Spindel 4 auf. Die Spindel 4 weist ein erstes Gewindes 6 auf. Das erste Gewinde 6 ist als Aussengewinde ausgebildet. Die Spindel 4 der Feueraufnahme 3 ist im Wesentlichen orthogonal zu der Feuerplatte 12 der Feueraufnahme 3 angeordnet. Die Spindel 4 weist eine Spindellänge 14 auf. Die Spindellänge 14 beträgt 30 cm. In der Säule 9 des Sockels 2 ist ein Spindelmutter 5 angeordnet. Die Spindelmutter 5 weist ein zweites Gewinde 7 auf. Das erste Gewinde 6 korrespondiert mit dem zweiten Gewinde 7. Das zweite Gewinde 7 der Spindelmutter 5 ist als Innengewinde ausgebildet.

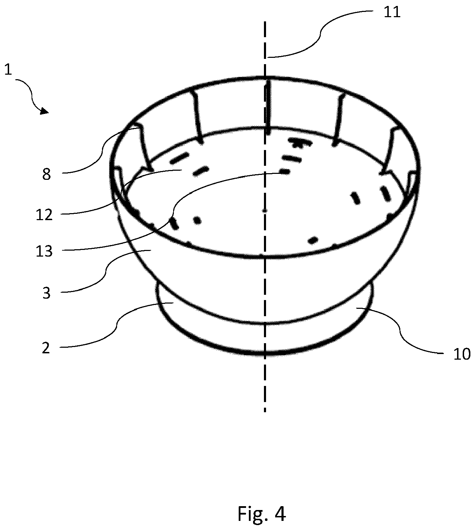

Figur 4 zeigt eine Ansicht einer Feuerschale 1. Die Feuerschale 1 weist einen Sockel 2 sowie eine Feueraufnahme 3 auf. Der Sockel 2 weist eine Bodenplatte 10 auf. Die Feueraufnahme 3 ist auf dem Sockel 2 angeordnet. Die Feueraufnahme 3 ist im Wesentlichen als abgestumpfte Halbkugel ausgebildet. Mit dem abgestumpften Ende ist die Feueraufnahme 3 auf der Bodenplatte 10 des Sockels 2 angeordnet. Die Feueraufnahme 3 weist Stützvorrichtungen 8 auf, auf dem eine Grillfläche (nicht dargestellt) anordenbar ist. In der Feueraufnahme 3 ist eine Feuerplatte 12 ausgebildet. Die Feuerplatte 12 weist Lufteinlässe 13 auf. Die Feuerplatte 12 ist im Wesentlichen parallel zu der Bodenplatte 10 des Sockels 2 ausgebildet. Die Feuerschale 1 weist eine Drehachse 11 auf. Die Feueraufnahme 3 ist drehbar um die Drehachse 11 auf dem Sockel 2 angeordnet. Der Sockel 2 mit der Bodenplatte 10 sowie die Feueraufnahme 3 sind im Wesentlichen rotationssymmetrisch zur Drehachse 11 ausgebildet.

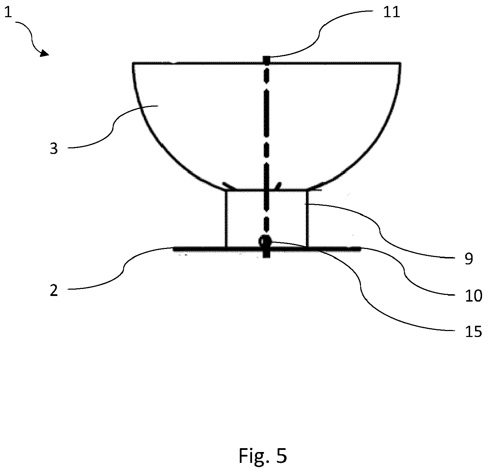

Figur 5 zeigt eine Seitenansicht einer höhenverstellten Feuerschale 1. Die Feuerschale 1 weist eine Feueraufnahme 3 sowie einen Sockel 2 auf. Der Sockel 2 weist eine Säule 9 sowie eine Bodenplatte 10 auf. Die Feuerschale 1 weist ausserdem eine Drehachse 11 auf. Die Feueraufnahme 3 ist drehbar um die Drehachse 11 auf dem Sockel 2 gelagert. Sowohl die Feuerschale 3 als auch die Säule 9 sowie die Bodenplatte 10 des Sockels 2 sind rotationssymmetrisch zu der Drehachse 11 ausgebildet. Die Feueraufnahme 3 ist in ihrer Höhe verstellt, so dass sie von der Bodenplatte 10 des Sockels 2 beabstandet ist. In der Säule 9 ist eine Luftöffnung 15 ausgebildet. Durch die Luftöffnung 15 kann Luft durch die Säule 9 zu dem Feuer (nicht dargestellt) strömen.

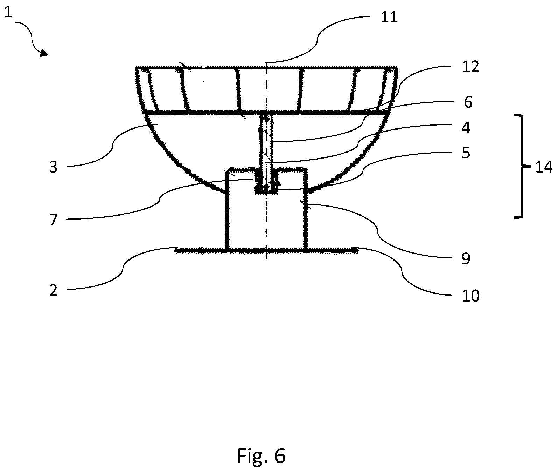

Figur 6 zeigt eine Seitenansicht eines Schnitts einer höhenverstellten Feuerschale 1. Die Feuerschale 1 weist eine Feueraufnahme 3 sowie einen Sockel 2 auf. Die Feueraufnahme 3 sowie der Sockel 2 sind rotationssymmetrisch in Bezug auf die Drehachse 11 ausgebildet. Die Feueraufnahme 3 ist in Bezug auf die Drehachse 11 drehbar auf dem Sockel 2 angeordnet. Der Sockel 2 umfasst eine Bodenplatte 10 sowie eine Säule 9. In der Säule 9 ist eine Spindelmutter 5 mit einem zweiten Gewinde 7 angeordnet. Das zweite Gewinde 7 ist ein Innengewinde. Die Feueraufnahme 3 weist eine Spindel 4 mit einem ersten Gewinde 6 auf. Das erste Gewinde 6 ist als Aussengewinde auf der Spindel 4 angeordnet. Die Spindel 4 weist eine Spindellänge 14 auf. Die Spindellänge 14 beträgt 30 cm. Das erste Gewinde 6 der Spindel korrespondiert mit dem zweiten Gewinde 7 der Spindelmutter. Die Spindel 4 ist in der Spindelmutter 5 angeordnet. Die Feueraufnahme 3 weist eine Feuerplatte 12 auf. Die Feuerplatte 12 ist im Wesentlichen horizontal angeordnet. Ausserdem ist die Feuerplatte 12 im Wesentlichen parallel zur Bodenplatte 10 angeordnet. Die Feueraufnahme 3 ist in ihrer Höhe verstellt, so dass die Feueraufnahme 3 von der Bodenplatte 10 beabstandet ist. Die Feueraufnahme 3 ist im Wesentlichen als abgestumpfte Halbkugel ausgebildet. Mit dem abgestumpften Ende ist die Feueraufnahme 3 auf der Bodenplatte 10 des Sockels 2 angeordnet.

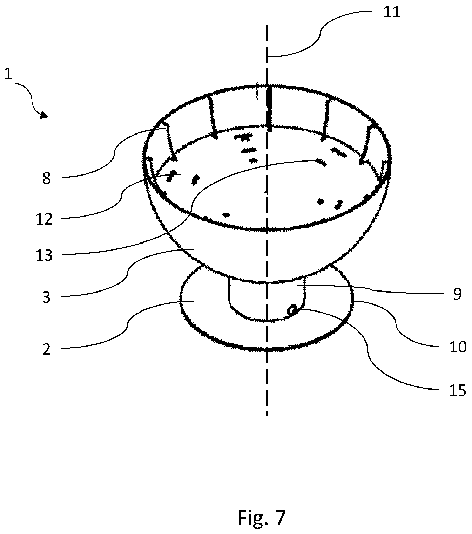

Figur 7 zeigt eine Ansicht einer höhenverstellten Feuerschale 1. Die Feuerschale 1 weist eine Feueraufnahme 3 sowie ein Sockel 2 auf. Der Sockel 2 weist eine Säule 9 sowie eine Bodenplatte 10 auf. Die Feueraufnahme 3 ist auf dem Sockel 2 angeordnet. Der Sockel 2 ist mit der Bodenplatte 10 auf dem Erdboden (nicht dargestellt) angeordnet. Die Feueraufnahme 3 weist Stützvorrichtungen 8 auf, auf die eine Grillfläche (nicht dargestellt) anordenbar ist. Ausserdem weist die Feueraufnahme 3 eine Feuerplatte 12 auf. In der Feuerplatte 12 sind Lufteinlässe 13 angeordnet. Auf der Feuerplatte 12 ist Brennmaterial (nicht dargestellt) für ein Feuer anordenbar. In der Säule 9 ist eine Luftöffnung 15 ausgebildet. Von einem Bereich ausserhalb der Säule 9 kann Luft durch die Luftöffnung 15 durch die Säule 9 und durch die Lufteinlässe 13 zu einem Feuer (nicht dargestellt) strömen, welches sich auf der Feuerplatte 12 befindet. Die Feuerschale 1 weist eine Drehachse 11 auf. Die Feueraufnahme 3 ist drehbar um die Drehachse 11 auf dem Sockel 2 angeordnet. Der Sockel 2 mit der Bodenplatte 10 sowie die Feueraufnahme 3 sind im Wesentlichen rotationssymmetrisch zur Drehachse 11 ausgebildet.

## Patentansprüche

1. Feuerschale (1) umfassend einen Sockel (2) und eine Feueraufnahme (3), wobei die Feueraufnahme (3) auf dem Sockel (2) angeordnet ist und wobei die Feueraufnahme (3) dazu ausgebildet ist, Brennmaterial für ein Feuer aufzunehmen, wobei die Feueraufnahme (3) und der Sockel (2) relativ zueinander um eine Drehachse (11) drehbar ausgebildet sind, **dadurch gekennzeichnet, dass** die Feueraufnahme (3) durch eine Drehung um die Drehachse (11) in ihrer Höhe verstellbar ist, wobei die Feueraufnahme (3) einen Schwerpunkt aufweist, welcher bevorzugt auf der Drehachse (11) liegt und wobei die Feueraufnahme (3) insbesondere bevorzugt rotationssymmetrisch ausgebildet ist.

2. Feuerschale (1) nach Anspruch 1, **dadurch gekennzeichnet, dass** die Feueraufnahme (3) ein erstes Gewinde (6) aufweist und dass der Sockel (2) ein zum ersten Gewinde (6) korrespondierendes zweites Gewinde (7) aufweist, wobei das erste Gewinde (6) bevorzugt ein Aussengewinde ist und das zweite Gewinde (7) bevorzugt ein Innengewinde ist.

3. Feuerschale (1) nach Anspruch 2, **dadurch gekennzeichnet, dass** es sich bei dem ersten Gewinde (6) und bei dem zweiten Gewinde (7) um ein Trapezgewinde und insbesondere um ein eingängiges Trapezgewinde handelt.

4. Feuerschale (1) nach einem der Ansprüche 2 - 3, **dadurch gekennzeichnet, dass** das erste Gewinde (6) und das zweite Gewinde (7) eine Gewindesteigung von 3 mm - 15 mm und insbesondere eine Gewindesteigung zwischen 5 mm und 10 mm aufweisen.

5. Feuerschale (1) nach einem der vorhergehenden Ansprüche, **dadurch gekennzeichnet, dass** die Feuerschale (1) eine Grillfläche für die Auflage von Grillgut umfasst, die in einem fixen Abstand zur Feueraufnahme (3) angeordnet ist und die durch Drehung der Feueraufnahme (3) höhenverstellbar relativ zum Sockel (2) ist, wobei die Grillfläche bevorzugt in einem oberen Bereich der Feueraufnahme (3) angeordnet ist, wobei die Grillfläche insbesondere zumindest teilweise ein Rost ist.

6. Feuerschale (1) nach einem der vorhergehenden Ansprüche, **dadurch gekennzeichnet, dass** die Feueraufnahme (3) zumindest teilweise die Form einer Halbkugel oder eines Ellipsoiden und insbesondere zumindest teilweise die Form einer Kugelkalotte aufweist.

7. Feuerschale (1) nach einem der vorhergehenden Ansprüche, **dadurch gekennzeichnet, dass** das erste Gewinde (6) oder das zweite Gewinde (7) als Aussengewinde einer Spindel (4) ausgebildet ist, wobei die Spindel (4) eine Spindellänge (14) zwischen 10 cm und 50 cm und insbesondere eine Spindellänge (14) zwischen 20 cm und 35 cm aufweist.

8. Feuerschale (1) nach einem der vorhergehenden Ansprüche, **dadurch gekennzeichnet, dass** der Sockel (2) eine Säule (9) und eine Bodenplatte (10) aufweist, wobei die Säule (9) und die Bodenplatte (10) eine im Wesentlichen identische Längsachse aufweisen, welche beim bestimmungsgemässen Einsatz der Feuerschale (1) lotrecht ausgebildet ist, und die Bodenplatte (10) radial von der Längsachse eine Ausdehnung aufweist, die mindestens 2-mal, bevorzugt mindestens 2.5-mal so gross ist wie die radiale Ausdehnung der Säule (9) und wobei die Bodenplatte (10) insbesondere bevorzugt radial von der Längsachse eine Ausdehnung aufweist, welche 0.6 - 0.8-mal so gross ist wie die radiale Ausdehnung der Feueraufnahme (3).

9. Feuerschale (1) nach einem der vorhergehenden Ansprüche, **dadurch gekennzeichnet, dass** die Feueraufnahme (3) eine Feuerplatte (12) aufweist, auf welcher der Brennstoff eines Feuers anordenbar ist, wobei die Feuerplatte (12) insbesondere mindestens ein Lufteinlass (13) aufweist.

10. Feuerschale (1) nach einem der vorhergehenden Ansprüche, **dadurch gekennzeichnet, dass** das erste Gewinde (6) und/ oder das zweite Gewinde (7) geschmiert ist und insbesondere die Säule (9) eine Öffnung aufweist, durch die eine Schmiervorrichtung einführbar ist.

11. Verfahren zum Verstellen der Höhe einer Feuerschale (1) gemäss einem der vorhergehenden Ansprüche, **dadurch gekennzeichnet, dass** durch Drehung der Feueraufnahme (3) die Feueraufnahme (3) in der Höhe verstellt wird.

12. Verfahren nach Anspruch 11, **dadurch gekennzeichnet, dass** die Feueraufnahme (3) ein erstes Gewinde (6) umfasst und der Sockel (2) ein zweites Gewinde (7) umfasst, die relativ zueinander drehen und so die Höhe der Feueraufnahme (3) verändern.

13. Verwendung eines Gewindes zwischen einer Feueraufnahme (3) und einem Sockel (2) zur Höhenverstellung der Feueraufnahme (3) und insbesondere einer an der Feueraufnahme (3) fixierten Grillfläche, relativ zum Sockel (2).
